# FASCICULE DE BREVET EUROPEEN

(11) **EP 0 698 741 B1**
(45) Date de publication et mention de la délivrance du brevet: **25.11.1998**
(21) Numéro de dépôt: 95401588.9
(22) Date de dépôt: 30.06.1995
(51) Int. Cl.: F16B 37/04, F16B 35/06

(54) **Vis à tête encagée pour montage en aveugle dans l'ouverture d'un panneau par exemple**
Schraube mit einem von einem Käfig umschlossenen Kopf zur Befestigung z.B. in der Öffnung einer Platte
Screw with caged head for blind mounting, for example in the opening of a panel

(30) Priorité: 18.07.1994 FR 9408862
(43) Date de publication de la demande: 28.02.1996
(73) Titulaire: RAPID S.A., F-75017 Paris (FR)
(72) Inventeur: Leon, Jean-Pierre, F-78000 Houilles (FR)
(74) Mandataire: Beauchamps, Georges

(56) Documents cités:
- DE-U- 9 402 403
- FR-A- 2 544 410
- GB-A- 687 618
- US-A- 2 381 233
- US-A- 2 839 165
- US-A- 2 867 258

## Description

La présente invention a pour objet une vis à tête encagée qui peut être montée en aveugle dans l'ouverture d'un panneau par exemple et sur lequel doit être fixé par vissage un autre panneau ou une pièce quelconque, correspondant au préambule de la revendication 1 (FR-A-2 544 410).

On a déjà proposé des vis à tête encagée pouvant être montées sur un panneau ou une tôle.

Mais la tête de vis était solidaire en rotation de la cage, de sorte que c'était l'ensemble tête-cage qui devait subir une rotation quart de tour pour permettre la retenue de la vis sur le panneau ou la tôle.

Outre le fait que le montage automatique et par robot d'une telle vis à tête encagée présentait des difficultés, il convenait de prévoir pour le panneau ou la tôle une ouverture ou un poinçonnage de forme appropriée et plus ou moins compliquée, afin de permettre, d'une façon d'ailleurs parfois non satisfaisante, le verrouillage par rotation quart de tour de la tête de vis avec sa cage dans ledit poinçonnage.

La présente invention a pour but de remédier notamment à ces inconvénients en proposant une vis à tête encagée pouvant être montée automatiquement par robot et sans difficultés sur un panneau par exemple, et n'exigeant aucun poinçonnage de forme spéciale dans le panneau pour obtenir un montage qui réalisera, en toute circonstance, une fixation solide et rigide de la vis sur le panneau.

A cet effet, l'invention a pour objet une vis à tête encagée dans une cage sensiblement en forme de U pour montage en aveugle dans l'orifice d'un panneau ayant les caractéristiques de la revendication 1.

Des modes particuliers de réalisation de l'invention sont indiqués dans les revendications dépendantes.

Mais les avantages et caractéristiques de l'invention apparaîtront mieux dans la description détaillée qui suit et se réfère aux dessins annexés, donnés uniquement à titre d'exemple, et dans lesquels.

La figure 1 est une vue en perspective agrandie et éclatée montrant de façon séparée, la vis, la cage destinée à recevoir la tête de la vis, et une partie de panneau avec orifice dans lequel doit être montée par clippage la vis à tête encagée.

Les figures 2 à 7 sont des vues de côté et en élévation de la vis à tête encagée selon cette invention montée sur un panneau, et illustrent successivement la cinématique de mise en place et de montage de la vis sur le panneau.

Les figures 8 à 13 sont des vues de dessus suivant les flèches VIII à XIII des figures 2 à 7 respectivement, et illustrent clairement les positions successives que prend la tête de vis dans sa cage lors du montage et du verrouillage.

En se reportant aux figures, on voit une vis V comportant une tige filetée 1 et une tête rectangulaire 2 encagée dans une cage 3 sensiblement en forme de U, étant entendu que la tête 2 avec sa cage 3 pourront être montées, en aveugle, par clippage dans l'orifice rectangulaire 14 d'un panneau P ou d'une pièce quelconque.

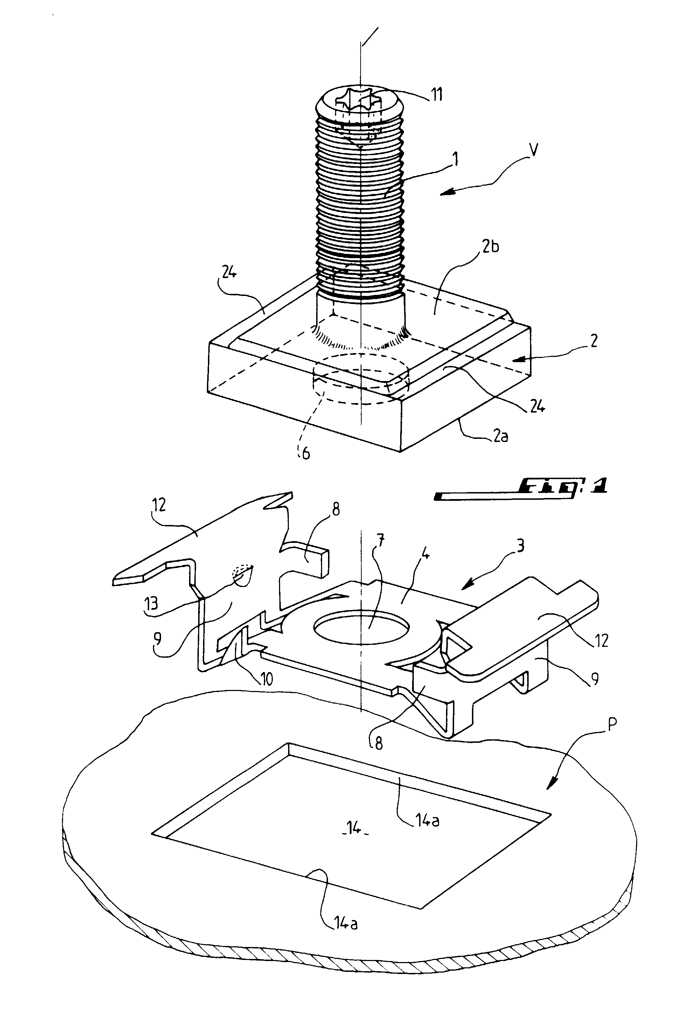

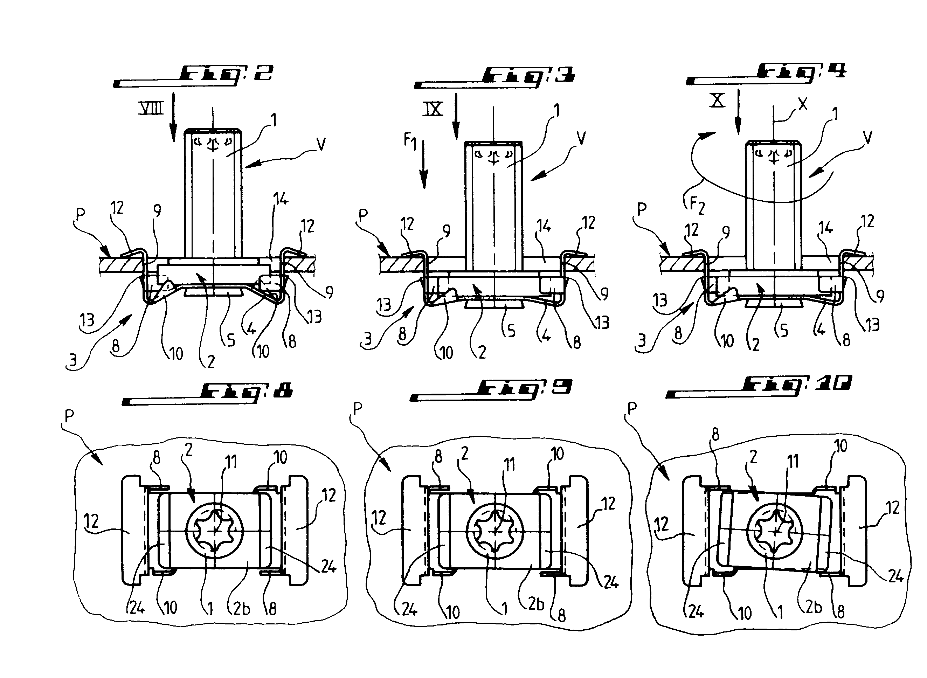

La tête de vis 2 est montée relativement mobile en rotation sur le fond 4 de la cage 3. Suivant un mode de réalisation préféré, et comme on le voit bien sur les figures 2 à 7, la tête de vis 2 est fixée par sertissage 5 sur le fond 4 de la cage 3.

Plus précisément, comme on le voit sur la figure 1, après avoir inséré la tête 2 dans la cage 3, la protubérance 6 prévue sur la face externe 2a de la tête 2 passant au travers d'un trou 7 ménagé dans le fond 4 de la cage 3, on réalise le sertissage 5 par un coup de presse ou analogue sur la protubérance 6, étant bien entendu que ce sertissage permettra la rotation relative de la tête de vis 2 dans la cage 3.

La cage 3 comporte, suivant une diagonale du fond rectangulaire 4, des pattes déformables 8. Plus précisément, les deux branches 9 du U que forme la cage 13 comportent chacune une patte déformable 8 qui s'étend et est repliée depuis un côté de chaque branche 9, et cela de façon que la ligne imaginaire reliant les deux pattes 8 corresponde sensiblement à la diagonale du fond 4 de la cage 3.

En outre, l'embase ou fond 4 de la cage comporte des griffes ou analogues 10 qui sont repliées et font saillie d'un côté et de l'autre de l'embase 4 vers le haut de la cage. Ces griffes 10, de même que les pattes déformables 8, sont bien visibles sur les figures 8 à 13. Les griffes 10, comme les pattes 8, sont au nombre de deux, et comme on le voit bien sur les figures 8 à 13, la ligne imaginaire reliant les deux griffes 10 correspond à l'autre diagonale de l'embase rectangulaire 4 de la cage 3, la première diagonale étant celle de la ligne imaginaire reliant les pattes déformables 8. Les griffes 10 ne sont pas déformables, comme on le verra plus loin à propos du fonctionnement.

On a montré en 11 sur la figure 1 une creusure polygonale pratiquée dans l'extrémité libre de la tige filetée 1 de la vis V. Une telle creusure permettra, à l'aide d'un outil automatique (non représenté) la rotation de la tête de vis 2 dans sa cage 3, comme on le décrira plus loin. On pourrait parfaitement, sans sortir du cadre de l'invention, prévoir, au lieu d'une creusure 11, une périphérie polygonale pour l'extrémité libre de la tige filetée 1 de la vis V.

Comme il apparaît clairement sur les figures, les branches 9 du U formant la cage 3 comportent des extrémités libres 12 qui sont repliées vers l'extérieur et permettront le maintien de la cage 3 sur le panneau P après son insertion dans l'orifice 14, comme on le voit bien sur les figures 2 à 7.

Par ailleurs, on voit également sur ces dernières figures que des bossages, emboutis ou analogues 13 font extérieurement saillie des branches 9 de la cage 3 pour permettre la retenue de ladite cage sur le panneau P, une fois introduite dans l'orifice 14.

Revenant à la figure 1, on voit clairement que la face 2b de tête de vis 2 opposée à celle 2a sertie sur le fond 4 de la cage 3, comporte deux épaulements opposés 24 susceptibles de coopérer avec deux bords opposés 14a de l'orifice 14 du panneau P après rotation de la tête de vis 2 dans sa cage 3 et verrouillage de ladite tête sur le dessous du panneau P.

Mais, pour une meilleure compréhension de l'invention, on décrira ci-après brièvement comment s'effectuent, automatiquement, la mise en place et le montage de la vis encagée V sur le panneau P, en se reportant plus particulièrement aux figures 2 à 7 et aux figures 8 à 13 leur correspondant respectivement.

Comme on le voit sur les figures 2 et 8, la vis V à tête 2 encagée dans la cage 3 est introduite et montée par clippage dans l'orifice 14 du panneau P, et cela suivant une direction correspondant à l'axe de la tige filetée 1 de la vis V.

Dans cette position, comme on le voit bien sur la figure 8, la tête 2 de la vis V est empêchée de tourner dans la cage 3 grâce aux pattes 8, ce qui permet d'ailleurs l'insertion aisée de l'ensemble cage 3 - tête de vis 2 dans l'orifice rectangulaire 14 du panneau P.

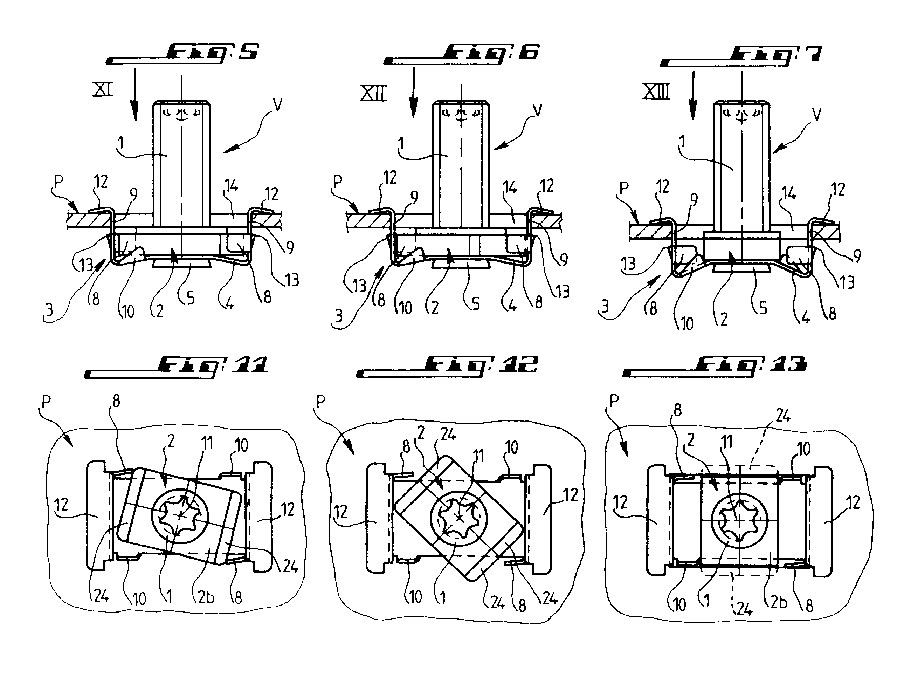

Une poussée axiale, à l'aide d'un outil, est alors exercée sur l'extrémité libre de la tige filetée 1 de la vis V, ce qui dégage quelque peu la face 2b de la tête de vis 2 du dessous du panneau P. C'est ce que l'on voit sur la figure 3 où la flèche F₁ matérialise la poussée verticale exercée sur la vis V.

Toujours à l'aide de l'outil, on fait alors subir alors à la vis V une rotation dans le sens des aiguilles d'une montre, comme matérialisé par la flèche F₂, de sorte que la vis va tourner, autour de son axe X, ce qui veut dire que la tête de vis 2 va tourner dans la cage 3 maintenue dans l'orifice 14 du panneau P. C'est ce que l'on voit sur les figures 4 et 10.

Ce faisant, et en accentuant la rotation, comme on le voit sur les figures 5 et 11, puis 6 et 12, les pattes 8 associées aux branches 9 de la cage 3 vont se déformer vers l'extérieur, jusqu'à ce que la tête 2 échappe à ces pattes.

En fin de rotation, c'est-à-dire après une rotation d'un quart de tour, suivant l'exemple représenté, et comme on le voit bien sur les figures 7 et 13, la tête de vis 2 viendra, par deux bords opposés, en butée sur les griffes 10 associées au fond 4 de la cage 3.

Ainsi, on aura réalisé un verrouillage automatique de la tête de vis 2 sur le panneau P.

Ce verrouillage sera en quelque sorte accentué par le fait que les bords opposés 14a de l'orifice 14 du panneau P viendront s'encastrer respectivement dans les épaulements opposés 24 de la face interne 2b de la tête de vis 2. Cet encastrement provient du fait, comme on l'a expliqué précédemment en se référant à la figure 3, que la vis avait subi une poussée axiale vers le bas pour permettre la rotation, et qu'en fin de rotation, comme représenté sur les figures 7 et 13, la tête de vis 2, se trouvant sollicitée vers le haut, va donc permettre l'encastrement des bords 14a de l'orifice 14 dans les épaulements 24.

On observera ici que la poussée sur la vis avant rotation (figure 3) et la reprise de la position normale de la vis en fin de rotation (figure 7) est due à une certaine élasticité de la cage 3, dont le fond ou embase 4 est légèrement bombé, comme on le voit bien sur toutes les figures.

On a donc réalisé suivant l'invention une vis à tête encagée pouvant être montée et verrouillée de façon automatique sur un panneau ou une pièce quelconque, et cela tout en conférant à l'assemblage vis-panneau les qualités requises de solidité et de rigidité, étant entendu que la vis pourra encaisser, après verrouillage sur le panneau, le couple de serrage écrou (non représenté) sur vis nécessaire pour fixer sur le panneau P un autre panneau (non représenté) ou une pièce quelconque.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Vis à tête (2) encagée dans une cage (3) sensiblement en forme de U pour montage en aveugle dans l'orifice (14) d'un panneau (P) par exemple, ladite cage (3) comportant des pattes ou moyens analogues (8) prévus sur les branches (9) de la cage (3) en forme de U, caractérisée en ce que les pattes (8) s'étendent depuis un côté de chaque branche (9) suivant un agencement tel que la ligne imaginaire reliant les pattes (8) corresponde sensiblement à une diagonale de l'embase (4) de la cage (3), et en ce que l'embase (4) de la cage (3) comporte des griffes ou moyens analogues (10) faisant saillie vers le haut de la cage suivant un agencement tel que la ligne imaginaire reliant les griffes (10) corresponde à l'autre diagonale de l'embase (4) de la cage, pour que la tête (2) de la vis (V) vienne en butée sur lesdites griffes après déformation des pattes (8) sous l'effet de la rotation de la tête (2) réalisant le verrouillage de la vis (V) par sa tête (2) sur le panneau (P).

2. Vis selon la revendication 1, caractérisée en ce que la tête de vis (2) est fixée par sertissage (5) sur l'embase (4) de la cage (3).

3. Vis selon la revendication 1 ou 2, caractérisée en ce que l'extrémité libre de la tige filetée (1) de la vis (V) forme un embout avec périphérie ou creusure polygonale (11) susceptible de coopérer avec un outil.

4. Vis selon l'une des revendications précédentes, caractérisée en ce que les branches (9) du U de la cage (3) comportent des extrémités libres (12) repliées vers l'extérieur ainsi que des bossages, emboutis ou analogues (13) extérieurement saillants pour permettre la retenue de la cage (3) sur le panneau (P).

5. Vis selon l'une des revendications précédentes, caractérisée en ce que la face (2b) de tête de vis (2) opposée à celle (2a) sertie sur l'embase (4) de la cage (3) comporte deux épaulements opposés (24) coopérant avec deux bords opposés (14a) de l'orifice (14) du panneau (P) après verrouillage de la tête de vis (2) sur celui-ci.

## Patentansprüche

1. Schraube mit einem in einem etwa U-förmigen Käfig (3) eingesetzten Kopf (2) zur blinder Anordnung in der Öffnung (14) z.B. einer Platte (P), wobei der besagte Käfig (3) an den Schenkeln (9) des U-förmigen Käfigs (3) vorgesehene Ansatzlappen oder ähnliche Mittel (8) aufweist, dadurch gekennzeichnet, daß die Ansatzlappen (8) sich von einer Seite jedes Schenkels (9) ab gemäß einer derartigen Anordnung erstrecken, daß die die Ansatzlappen (8) verbindende Gedankenlinie etwa einer Diagonale des Grundteils (4) des Käfigs (3) entspricht und daß der Grundteil (4) des Käfigs (3) nach oben des Käfigs vorspringende Klauen oder ähnliche Mittel (10) gemäß einer derartigen Anordnung aufweist, daß die die Klauen (10) verbindende Gedankenlinie der anderen Diagonale des Grundteils (4) des Käfigs entspricht, damit der Kopf (2) der Schraube (V) an die besagten Klauen nach Verformung der Ansatzlappen (8) unter der Wirkung der Drehung des Kopfes (2), die die Verriegelung der Schraube (V) mit ihrem Kopf (2) an der Platte (P) gewährleistet, zum Anschlag kommt.

2. Schraube nach Anspruch 1, dadurch gekennzeichnet, daß der Schraubenkopf (2) durch Umfalzen (5) an dem Grundteil (4) des Käfigs (3) befestigt ist.

3. Schraube gemäß Anspruch 1 oder 2, dadurch gekennzeichnet, daß das freie Ende des Gewindeschaftes (1) der Schraube (V) einen Endteil mit einem vieleckigen Umfang oder einer vieleckigen Einsenkung (11), der bzw. die fähig ist, mit einem Werkzeug zusammenzuwirken, bildet.

4. Schraube nach einem der vorangehenden Ansprüche, dadurch gekennzeichnet, daß die Schenkel (9) des U's des Käfigs (3) nach aussen umgebogene freie Enden (12), sowie nach aussen vorspringende Buckel, gekümpelte Teile oder dergleichen (13) aufweisen, um das Zurückhalten des Käfigs (3) an der Platte (P) zu gestatten.

5. Schraube gemäß irgeneinem der vorangehenden Ansprüche, dadurch gekennzeichnet, daß diejenige Fläche (2b) des Schraubenkopfes (2), die derjenigen (2a), die an dem Grundteil (4) des Käfigs (3) eingefasst ist, entgegengesetzt ist, zwei entgegengesetzte mit zwei entgegengesetzten Rändern (14a) der Öffnung (14) der Platte (P), nach Verriegelung des Schraubenkopfes (2) an derselben, zusammenwirkende Schultern (24) aufweist.

## Claims

1. Screw with a head (2) caged in a substantially U-shaped cage (3) for blind mounting into an aperture (14) of a panel (P) for example, the said cage (3) comprising lugs or like means (8) provided on the legs (9) of the U-shaped cage (3), characterized in that the lugs (8) extend from one side of each leg (9) according to such an arrangement that the imaginary line connecting the lugs (8) correspond substantially to one diagonal of the base (4) of the cage (3) and in that the base (4) of the cage (3) comprises claws or like means (10) projecting upwards of the cage according to such an arrangement that the imaginary line connecting the claws (10) correspond to the other diagonal of the base (4) of the cage in order that the head (2) of the screw (V) comes in abutment upon the said claws after deformation of the lugs (8) under the effect of the rotation of the head (2) providing the locking of the screw (V) with its head (2) onto the panel (P).

2. Screw according to claim 1, characterized in that the screw head (2) is fastened by crimping (5) onto the base (4) of the cage (3).

3. Screw according to claim 1 or 2, characterized in that the free end of the threaded shank (1) of the screw (V) forms an end portion with a polygonal periphery or hollow (11) capable of co-operating with a tool.

4. Screw according to one of the foregoing claims, characterized in that the legs (9) of the U of the cage (3) comprise free ends (12) bent outwards as well as outwards projecting bosses, pressings or the like (13) to permit the cage (3) to be retained onto the panel (P).

5. Screw according to one of the foregoing claims, characterized in that that face (2b) of the screw head (2) which is opposite to that (2a) crimped onto the base (4) of the cage (3) comprises two opposite shoulders (24) co-operating with two opposite edges (14a) of the aperture (14) of the panel (P) after locking of the screw head (2) onto the latter.
